# FASCICULE DE BREVET EUROPEEN

(11) **EP 0 795 272 B1**
(45) Date de publication et mention de la délivrance du brevet: **21.05.2003**
(21) Numéro de dépôt: 97400498.8
(22) Date de dépôt: 04.03.1997
(51) Int. Cl.: A23B 7/154, A23B 7/06, A23B 7/005

(54) **Procédé de traitement de fruits et légumes**
Behandlungsverfahren für Früchten und Gemüse
Fruit and vegetable treatment process

(30) Priorité: 12.03.1996 FR 9603100
(43) Date de publication de la demande: 17.09.1997
(60) Demande divisionnaire: 03007116.1
(73) Titulaire: XEDA INTERNATIONAL, 13670 Saint-Andiol (FR)
(72) Inventeur: Bompeix, Gilbert, 75116 Paris (FR); Sardo, Alberto, 78150 Le Chesnay (FR)
(74) Mandataire: Bernasconi, Jean Raymond

(56) Documents cités:
- EP-A- 0 161 989
- EP-A- 0 287 946
- EP-A- 0 454 097
- EP-A- 0 512 580
- EP-A- 0 513 354
- WO-A-91/05479
- WO-A-91/18058
- WO-A-92/10934
- WO-A-92/17070
- WO-A-95/09536
- WO-A-95/12311
- FR-A- 1 471 173
- US-A- 5 209 870
- PATENT ABSTRACTS OF JAPAN vol. 11, no. 353 (C-457), 18 novembre 1987 & JP 62 126931 A (SAN EI CHEM IND), 9 juin 1987,

## Description

La présente invention concerne un procédé de traitement des fruits et légumes frais.

Après leur récolte, les fruits et légumes frais sont couramment stockés, pendant une période qui peut être relativement longue, avant d'être mis sur le marché pour une consommation rapide.

Au cours de cette période de stockage, il importe que les fruits et légumes ne perdent pas leurs qualités, notamment d'aspect. Celles-ci peuvent être dégradées, en particulier par la prolifération de champignons à la surface du fruit ou du légume, qui conduit à la détérioration rapide du fruit ou du légume touché, ou par le phénomène d'échaudure (ou "scald") qui se traduit par un noircissement de la peau des fruits ou légumes dû à des produits oxydés, s'accumulant dans la couche cireuse de surface, phénomène qui peut gagner la pulpe des fruits. Ces détériorations sont encore plus rapides si le fruit ou le légume présente des micro-blessures constituées par des entailles dans la peau.

De nombreux produits existent et sont disponibles pour traiter les fruits et légumes contre cette détérioration au cours du stockage. Toutefois, ils ont souvent l'inconvénient de présenter des risques de toxicité pour le consommateur. Les nouveaux produits synthétiques disponibles sur le marché et destinés à pallier cet inconvénient ont cependant le désavantage d'un prix élevé, lié au coût de leur développement.

Il serait souhaitable de pouvoir s'orienter vers des molécules déjà connues d'accès facile, et présentant une phytotoxicité faible ou nulle, mais la plupart des molécules testées se sont avérées inefficaces ou pratiquement inertes pour le contrôle de physiopathie oxydative des fruits et légumes ou du développement fongique sur ces derniers.

La présente invention a précisément pour but de fournir un procédé de traitement des fruits et légumes après récolte, mettant en oeuvre des molécules largement disponibles, notamment de produits d'origine naturelle, ne présentant pas de risques de toxicité pour le consommateur.

C'est en cherchant à atteindre ce but qu'il a été découvert dans la présente invention que des composés terpéniques, éventuellement en association avec des agents antioxydants, qui sont des molécules considérées jusqu'à présent comme inefficaces dans le traitement des fruits et légumes par contact avec une composition liquide, se révèlent hautement efficaces lorsqu'elles sont utilisées dans un véhicule aqueux à une température supérieure à la température ambiante et inférieure à la température de dégradation par la chaleur des fruits et légumes.

Au sens de la présente description, le terme "inefficace" désigne des produits totalement inactifs en solution ou dispersion aqueuse à température ambiante, dans un traitement des fruits et légumes, notamment un traitement anti-fongique ou anti-échaudure, ou bien des produits très faiblement actifs en solution ou dispersion à température ambiante aux doses habituelles de traitement mais ne procurant pas une protection satisfaisante des fruits et légumes, ou bien ne procurant des résultats corrects que pour des doses d'utilisation très largement supérieures aux doses habituelles, ces doses excessives pouvant être toxiques.

Il est déjà connu que l'immersion d'un fruit, notamment de pêches ou de pommes, dans de l'eau chaude à une température d'environ 45 à 60°C permettait d'en réduire la dégradation causée par le développement de champignons. Il est également connu de coupler un traitement par l'eau chaude avec une faible dose de produits fongicides utilisés habituellement dans des compositions aqueuses, afin d'augmenter l'efficacité de ces derniers pour le contrôle des champignons.

Mais la littérature ne décrit pas l'effet de potentialisation exercé par l'eau chaude sur des substances reconnues comme inefficaces dans les traitements de fruits et légumes.

WO 92/17070 vise des compositions utilisables en vue de la protection des fruits et légumes comprenant un polymère de type polysaccharide, un conservateur, un acidulant, un premier émulsifiant qui est la lécithine et un second émulsifiant, et éventuellement un tocophérol à titre d'antioxydant.

Cependant, les compositions traitantes de ce document ne contiennent pas de terpènes, mais, à titre de conservateur à fonction antimicrobienne et actif contre les pathogènes des plantes, un constituant choisi parmi les propionates métalliques, l'acide benzoïque, les benzoates et sorbates métalliques et le bisulfate de sodium.

Patent Abstract of Japan, vol. 11, n° 353, 1987 et JP 62 1269 31 ont trait à un procédé de stérilisation de légumes frais consistant à traiter les légumes frais à l'aide d'une solution aqueuse contenant un flavonoïde, un acide organique et un sel de calcium, mais ne contenant pas de terpènes.

FR 1 471 173 décrit un procédé de préparation de légumes permettant d'améliorer leur durée de conservation. Ce procédé consiste, après nettoyage et 'épluchage du légume, à immerger celui-ci dans un bain chaud contenant de l'eau, du sel, de l'acide citrique, de l'acide ascorbique et du bisulfite, porté à une température de 60 à 90°C puis dans un bain moins chaud de même composition.

EP 454 097 concerne un procédé d'extraction d'antioxydant à partir de feuilles de romarin.

EP 512 580 divulgue un procédé de stabilisation de la couleur des légumes impliquant le traitement à 50-70°C pendant 1 à 6 minutes desdits légumes, par exemple par lavage par une composition aqueuse contenant un agent antimycotique tel que le peroxyde d'hydrogène, le chlore ou l'acide ascorbique.

WO 95/12 311 et WO 95/09 536 décrivent des traitements mettant en oeuvre des terpènes en vue d'une action antigerminative. Le procédé de WO 95/12 311 utilise le jasmonate comme principe actif. Le traitement préconise la mise en contact du tubercule avec le jasmonate à une température inférieure à la température ambiante soit par immersion, vaporisation ou par chargement de l'air ambiant en principe actif.

WO 95/09 536 préconise l'utilisation d'un mélange de carvone et de menthol, les méthodes de mise en contact avec les tubercules variant entre les méthodes de pulvérisation et la mise en contact par chargement de l'air ambiant en principes actifs. Là encore, la température est maintenue au-dessous de la température ambiante.

EP 161 989 a trait à un traitement par thermonébulisation de fruits et légumes mais n'envisage pas le traitement par des terpènes.

WO 91/05 479 divulgue un traitement des pommes et des poires contre l'oxydation qui comprend la mise en contact des fruits et légumes avec la combinaison d'un ester de saccharose et d'un autre antioxydant tel que, par exemple, un tocophérol. Ce document n'envisage pas davantage le traitement par des terpènes.

L'invention a ainsi pour objet un procédé de traitement antifongique de fruits ou de légumes après récolte, caractérisé en ce qu'il comprend les étapes consistant à :
- porter à une température de 40 à 60°C une composition traitante liquide comprenant, dans un véhicule aqueux, au moins un agent traitant qui est un composé terpénique, et
- mettre les fruits ou légumes au contact de ladite composition traitante liquide à ladite température pendant une durée inférieure ou égale à 10 minutes par immersion ou douchage de telle sorte que les fruits, respectivement les légumes, sont chauffés en surface à une température d'au moins 35°C, de préférence d'au moins 40°C.

Les composés terpéniques peuvent être utlisés dans la présente invention pour fournir un traitement fongicide des fruits et légumes. Des traitements fongicides, à base de terpène, sont déjà connus, mais mettent en oeuvre les composés terpéniques en phase vapeur par volatilisation dudit composé dans l'enceinte de traitement. Des traitements de fruits et légumes par des compositions liquides contenant des terpènes se sont avérés inefficaces, jusqu'à présent, car ils nécessitaient une dose importante de compositions traitantes et un renouvellement fréquent des applications.

Les terpènes, utilisables selon la présente invention, sont de préférence des monoterpènes, tels que le pinène ou le limonène. Les monoterpènes oxygénés sont préférables aux monoterpènes simplement hydrocarbonés. On peut citer comme exemple .le terpinéol, l'eucalyptol, le menthol, la menthone, la carvone, le cinéol, le citronellal. On préfère les composés de la classe des terpènes d'origine naturelle, bien que ces composés puissent également être accessibles par voie synthétique.

Selon un mode de réalisation préféré de l'invention, la composition traitante comprend en outre un agent antioxydant de type polyphénol.

Les polyphénols manifestent grâce au procédé de l'invention un effet antioxydant suffisant pour être efficace dans un traitement anti-échaudure. On notera que les composés antioxydants ont également un effet très positif sur la résistance des fruits et légumes aux infections fongiques.

Par polyphénol on entend, selon l'invention, des composés comportant un ou plusieurs noyaux phényle substitués par au moins deux groupes hydroxyle.

Des exemples de tels polyphénols sont la quercétine et le rosmaridiphénol de formules respectives:

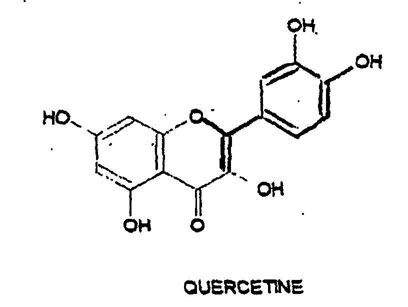

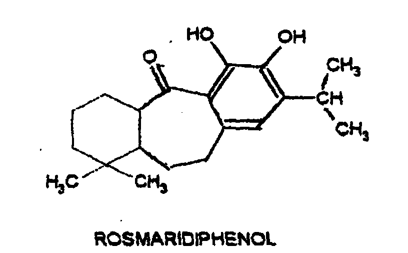

Les polyphénols préférés utilisés selon l'invention sont d'origine naturelle. De façon avantageuse les polyphénols sont extraits de végétaux ou de fruits. Ils peuvent être utilisés après extraction sous la forme de mélanges complexes de plusieurs polyphénols. Ces mélanges contiennent de préférence au moins 70 %, mieux encore au moins 80 % et plus préférablement au moins 90 % de polyphénols. Toutefois, des mélanges moins concentrés peuvent également être utilisés. De tels extraits naturels, plus ou moins concentrés en polyphénols, sont facilement accessibles.

L'homme du métier peut notamment les obtenir par mise en oeuvre de méthodes connues d'extraction et purification.

La composition traitante se présente avantageusement sous forme de solution ou de dispersion dans ledit véhicule aqueux.

Selon que le produit est plus ou moins soluble dans l'eau, la composition peut également comprendre en outre au moins un tensioactif choisi de façon connue en soi parmi les tensioactifs non-ioniques, anioniques, cationiques et amphotères.

La teneur en ledit produit dans la composition traitante est avantageusement de 100 à 10 000 ppm. En particulier, on préfère des compositions comprenant de 100 à 5000 ppm, de préférence 200 à 5000 ppm de composés terpéniques, ainsi que des compositions comprenant de 500 à 10 000 ppm de polyphénols.

Avant application sur les fruits ou légumes, la composition liquide est chauffée à une température de 40 à 60°C, de préférence de 45 à 55°C, par exemple entre 47 et 52°C, mieux encore de 48 à 52°C, et mieux encore 50°C.

La mise en contact avec les fruits ou légumes a lieu de façon à chauffer en surface les fruits et légumes à une température d'au moins 35°C, mieux encore d'au moins 40°C, par exemple 45-50°C. Ainsi, l'application de la composition sur les fruits ou légumes est-elle avantageusement réalisée par immersion ou douchage. Une simple pulvérisation ou nébulisation de la composition traitante est souvent insuffisante pour chauffer les fruits ou légumes en surface à la température souhaitée, rendant inefficace le procédé de l'invention.

Les techniques mises en oeuvre dans l'invention réalisent une application massive de la composition liquide. Dans le cas d'un douchage ou de techniques analogues, il est préférable d'appliquer la composition sous forme d'un jet continu de liquide. L'aspersion sur les fruits ou légumes de grosses gouttes dont la taille n'est pas inférieure à environ 100 µm n'est-cependant pas exclue.

La durée de cette opération est très courte, généralement inférieure ou égale à 10 minutes, notamment de 30 secondes à 10 minutes, avantageusement de 30 secondes à 5 minutes. Un temps de contact de 2 à 3 minutes est le plus souvent suffisant.

Il va sans dire que l'homme du métier ajustera le temps de mise en contact des fruits et légumes avec la composition traitante et la température de la composition traitante de façon à ne pas abîmer les fruits ou légumes et éviter un début de cuisson.

L'application de la compositions se fait de préférence de telle sorte que la quantité d'agent traitant appliquée corresponde aux doses habituelles d'utilisation d'agent traitant dans les traitements en question. Cette quantité peut être avantageusement de 0,4 à 40 g dudit agent par tonne de fruits ou de légumes traités.

De préférence, la quantité d'agent antioxydant utilisée sera de 2 à 40 g/tonne et la quantité de composé terpénique sera de 0.4 à 20 g/tonne de fruits ou légumes traités.

Lorsque la durée de traitement par la composition chaude désirée est atteinte, il peut être mis fin à l'application par tous moyens connus, notamment par simple arrêt de l'aspersion ou retrait des fruits ou légumes du bac d'immersion. Les fruits ou légumes sont alors aptes à être stockés en vue de leur distribution ultérieure.

Dans une variante avantageuse, en particulier dans le cas- des fruits ou légumes sensibles à la chaleur, le procédé peut comprendre en outre une étape consistant à refroidir rapidement les fruits ou légumes qui ont été mis au contact de la composition traitante chaude, et ce jusqu'à une température inférieure ou égale à la température ambiante.

Ce refroidissement peut être réalisé par circulation d'air ou par contact avec de l'eau (notamment immersion ou aspersion) dont la température inférieure ou égale à la température ambiante.

De manière surprenante, le procédé de l'invention permet, avec une seule application de composition traitante à la dose de matière active habituelle et un temps de traitement extrêmement réduit. de protéger durablement les fruits et légumes contre l'oxydation ou les infections fongiques.

Ce procédé est d'autant plus avantageux lorsque les agents traitants sont des substances naturelles, dont l'ingestion est sans danger pour le consommateur.

Les exemples ci-après illustrent l'invention.

### I - Traitement antifongique de pommes Golden

### EXEMPLE 1

On prépare une émulsion hydrodispersible de 1-carvone ayant la composition pondérale suivante :
1-carvone : 30 %
Nonylphénol éthoxylé à
10 unités d'oxydé d'éthylène : 70%

Cette émulsion est diluée dans de l'eau à raison de 1.33 kg/hl pour fournir une composition traitante, titrant 4000 ppm de 1-carvone.

Un lot de pommes golden est traité par immersion dans cette composition pendant un temps de 2 minutes, à la température de 50°C, à raison de 10 g de 1-carvone par tonne de pommes.

Après avoir été retirées du bain d'immersion, les pommes sont inoculées avec des pourritures de Botrytis cinerea, puis stockées à la température ambiante de 5°C.

On mesure après différentes durées de stockage le taux d'inoculation réusai, c'est-à-dire le nombre de souches qui se sont développées par rapport au nombre total de souches inoculées.

### EXEMPLE COMPARATIF 1

L'exemple 1 est reproduit à ceci près que l'immersion a lieu dans la composition à la température ambiante.

Les résultats de ces exemples sont consignés dans le tableau 1 ci-après.

**Tableau 1**

| EXEMPLE | Température d'immersion (°C) | Taux d'inoculation réussi (%) après | | |
|---|---|---|---|---|
| | | 14 jours | 23 jours | 30 jours |
| 1 | 50 | 0 | 4 | 4 |
| Comparatif 1 | ambiante | 48 | 60 | 84 |

Cet exemple prouve que le traitement selon l'invention à la température de 50°C et pendant 2 minutes seulement permet d'enregistrer une très bonne efficacité de la 1-carvone qui est quasiment inefficace en composition aqueuse à la température ambiante. En effet, seules 4 % des pourritures se sont développées après un mois de stockage à 5°C au lieu des 84 % présentes sur les fruits témoins traités à la température ambiante.

Les exemples suivants sont présents à titre indicatif dans la description.

### II - Protocole de traitement utilisable lorsque la composition traitante contient une substance antioxydante

### Protocoles 1 à 3

Des pommes Melrose sont traitées après récolte avec une composition comprenant des polyphénols concentrés extraits d'épinards (par la suite, notés NAO) en solution aqueuse à une concentration de 0,4% en poids (4000 ppm), à raison de 20 g de NAO par tonne de pommes. Le traitement a consisté en une immersion pendant deux minutes à une température indiquée dans le tableau 1 ci-après.

Les fruits retirés de la composition après les deux minutes d'immersion ont été stockés à l'air libre, à la température de 5°C pendant une période de neuf mois, à l'issue de laquelle on a évalué le taux d'échaudure et l'aspect du fruit.

Le taux d'échaudure est exprimé par le nombre de fruits présentant des taches noirés typiques de cette physiopatie, par rapport au nombre de fruits traités.

L'aspect des fruits a été noté sur une échelle à trois niveaux :
*** : fruit indemne ;
** : fruit présentant de petites taches ponctuelles (de nature différente des taches noires de « scald ») ;
* : fruit présentant quelques taches de petite dimension ne dépassant pas un quart du fruit ;
○ : fruit présentant de nombreuses taches dépassant la moitié du fruit - aspect inacceptable du point de vue commercial.

Les résultats de ces évaluations sont consignés dans le tableau 2 ci-après où figurent également les résultats des protocoles 4 et 5 et des exemples comparatifs 1 à 3 explicités ci-dessous.

### Protocoles 4 et 5

Le traitement du protocole 1 a été reproduit avec une composition contenant en outre 4000 ppm de nonyphénol éthoxylé à 30 unités d'oxyde d'éthylène (NP-30 OE).

### Exemples comparatifs 1 et 2

Les compositions traitantes des protocoles 1 et 4 sont utilisées pour traiter la même quantité de pommes par immersion à la température ambiante pendant une durée de 20 minutes.

### Exemple comparatif 3

La même quantité de pommes est traitée par une composition comprenant de la diphénylamine en solution aqueuse à une concentration de 500 ppm, par immersion à température ambiante pendant une durée de 2 minutes.

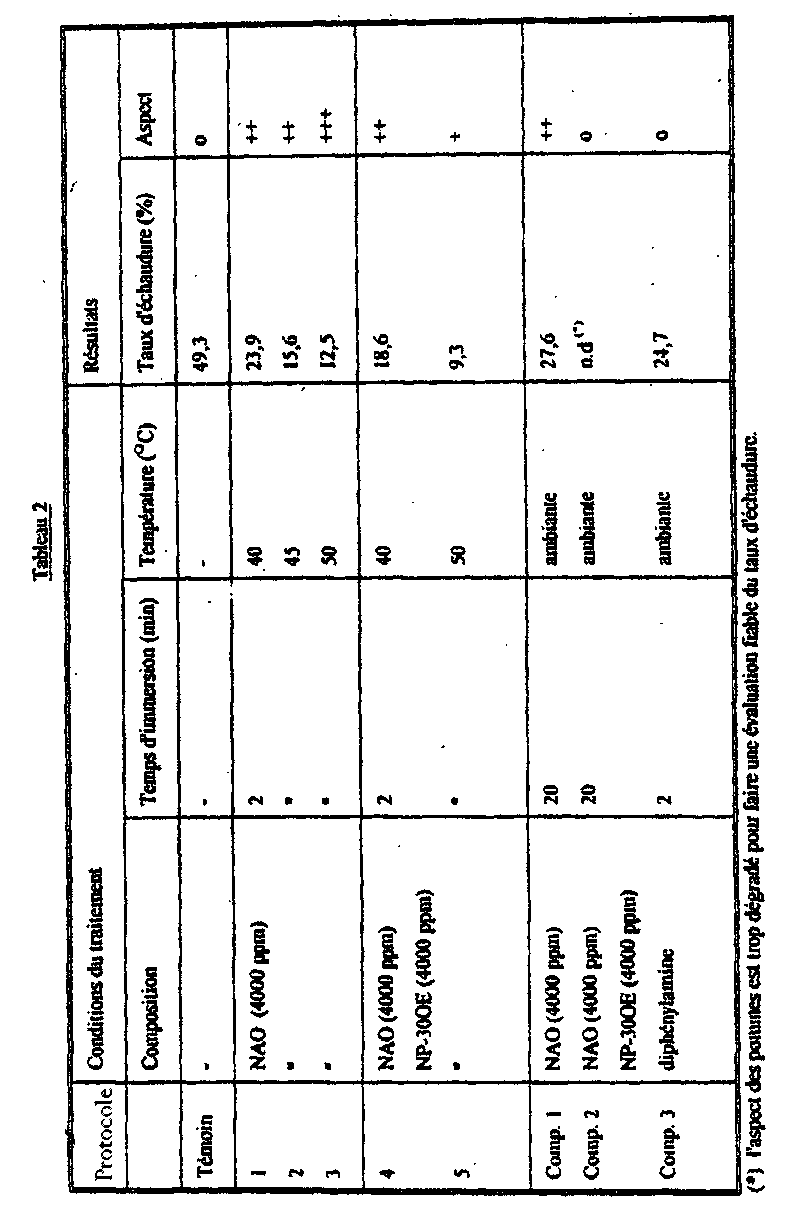

## Revendications

1. Procédé de traitement antifongique de fruits ou de légumes après récolte, comprenant les étapes consistant à :
- porter à une température de 40 à 60°C une composition traitante liquide comprenant, dans un véhicule aqueux, au moins un agent traitant qui est un composé terpénique, et
- mettre les fruits ou légumes au contact de ladite composition traitante liquide à ladite température pendant une durée inférieure ou égale à 10 minutes par immersion ou douchage de telle sorte que les fruits, respectivement les légumes sont chauffés en surface à une température d'au moins 35°C, de préférence d'au moins 40°C.

2. Procédé selon la revendication 1, **caractérisé en ce que** le composé tempénique est un monoterpène, de préférence un monoterpène oxygéné, notamment d'origine naturelle.

3. Procédé selon la revendication 1 ou 2, **caractérisé en ce que** ladite composition traitante comprend en outre un agent antioxydant de type polyphénol d'origine naturelle.

4. Procédé selon la revendication 3, **caractérisé en ce que** l'anti-oxydant de type polyphénol est un extrait naturel contenant au moins 70% en poids de polyphénols, de préférence au moins 80% en poids.

5. Procédé selon l'une quelconque des revendications 1 à 4, **caractérisé en ce que** la composition traitante comprend en outre au moins un agent tensioactif choisi parmi les tensioactifs non-ioniques, anioniques, cationiques et amphotères.

6. Procédé selon l'une quelconque des revendications 1 à 5, **caractérisé en ce que** la composition traitante comprend de 100 à 5000 ppm d'un composé terpénique.

7. Procédé selon l'une quelconque des revendications 3 et 4, **caractérisé en ce que** la composition traitante comprend de 500 à 10 000 ppm de polyphénol.

8. Procédé selon l'une quelconque des revendications 1 à 7, **caractérisé en ce que** la dose d'agent traitant utilisée est de 0,4 à 40 grammes par tonne de fruits ou légumes.

9. Procédé selon l'une quelconque des revendications 1 à 9, **caractérisé en ce qu'**il comprend une étape consistant à refroidir rapidement les fruits ou légumes mis au contact de la composition traitante chaude jusqu'à une température inférieure ou égale à la température ambiante.

10. Procédé selon la revendication 10, **caractérisé en ce que** l'on-refroidit les fruits par circulation d'air ou par contact avec de l'eau, dont la température est inférieure ou égale à la température ambiante.

11. Procédé selon l'une quelconque des revendications précédentes, **caractérisé en ce que** la composition traitante est portée à une température comprise entre 45 et 55°C, de préférence entre 47 et 52°C.

## Claims

1. Process for the anti-fungal treatment of fruit or vegetables after harvest, comprising the steps of :
- bringing to a temperature of 40° to 60°, a liquid treatment composition comprising, in an aqueous solution, at least one treating agent which is a terpene compound, and
- bringing the fruit or vegetables into contact with the said liquid treatment composition for a period of less than, or equal to, 10 minutes of immersion or spraying, in such a way that the fruit, or vegetables, are heated on the surface to a temperature of at least 35°C, preferably at least 40°C.

2. Process according to claim 1, **characterised in that** the terpene compound is a monoterpene, preferably an oxygenated monoterpene, notably of natural origin.

3. Process according to claims 1 or 2, **characterised in that** the said treatment composition furthermore comprises an anti-oxidant agent of the polyphenol type of natural origin.

4. Process according to claim 3, **characterised in that** the anti-oxidant of the polyphenol type is a natural extract containing at least 70% in weight of polyphenols, preferably at least 80% in weight.

5. Process according to any of claims 1 to 4, **characterised in that** the treatment composition furthermore comprises at least one surface active agent selected from non-ionic, anionic, cationic and amphoteric surfactants.

6. Process according to any of claims 1 to 5, **characterised in that** the treatment composition comprises 100 to 5,000 ppm of a terpene compound.

7. Process according to either of claims 3 or 4, **characterised in that** the treatment composition comprises 500 to 10,000 ppm of polyphenol.

8. Process according to any of claims 1 to 7, **characterised in that** the dosage of treating agent used is 0.4 to 40 grams per tonne of fruit or vegetables.

9. Process according to any of claims 1 to 9, **characterised in that** it includes a stage consisting of rapidly chilling the fruit or vegetables which have been in contact with the hot treatment composition to a temperature lower than or equal to the ambient temperature.

10. Process according to claim 10, **characterised in that** the fruit is chilled by air circulation or by contact with water at a temperature which is lower than or equal to the ambient temperature.

11. Process according to any of the preceding claims, **characterised in that** the treatment composition is brought to a temperature of between 45 and 55°C, preferably between 47 and 52°C.

## Patentansprüche

1. Verfahren zur Antipilz-Behandlung von Früchten oder Gemüse nach der Ernte, das die Schritte aufweist, die bestehen aus:
- eine flüssige Behandlungszusammensetzung, die in einem wässrigen Träger zumindest ein Behandlungsmittel umfasst, das eine Terpen-Verbindung ist, auf eine Temperatur zwischen 40 und 60ºC zu bringen, und
- in Kontakt-Bringen der Früchte und des Gemüses mit dieser flüssigen Behandlungszusammensetzung bei dieser Temperatur für eine Zeitdauer von weniger als oder gleich 10 Minuten durch Eintauchen oder Abbrausen derart, dass die Früchte bzw. das Gemüse auf der Oberfläche auf eine Temperatur von mindestens 35ºC, vorzugsweise von mindestens 40ºC erhitzt werden.

2. Verfahren gemäß Anspruch 1, **dadurch gekennzeichnet, dass** die Terpen-Verbindung ein Monoterpen, vorzugsweise ein oxygeniertes Monoterpen, insbesondere natürlichen Ursprungs, ist.

3. Verfahren gemäß Anspruch 1 oder 2, **dadurch gekennzeichnet, dass** die Behandlungszusammensetzung ferner ein Antixoyxdationsmittel vom Polyphenoltyp natürlichen Ursprungs umfasst.

4. Verfahren gemäß Anspruch 3, **dadurch gekennzeichnet, dass** das Antixoyxdationsmittel vom Polyphenoltyp ein natürlicher Extrakt ist, der mindestens 70 Gew.-% Polyphenole, vorzugsweise mindestens 80 Gew.-% Polyphenole enthält.

5. Verfahren gemäß einem der Ansprüche 1 bis 4, **dadurch gekennzeichnet, dass** die Behandlungszusammensetzung ferner mindestens ein oberflächenaktives Mittel umfasst, das aus nicht-ionischen, anionischen, kationischen und amphoteren Detergenzien ausgewählt wird.

6. Verfahren gemäß einem der Ansprüche 1 bis 5, **dadurch gekennzeichnet, dass** die Behandlungszusammensetzung 100 bis 5000 ppm einer Terpen-Verbindung umfasst.

7. Verfahren gemäß einem der Ansprüche 3 und 4, **dadurch gekennzeichnet, dass** die Behandlungszusammensetzung 500 bis 10000 ppm Polyphenol umfasst.

8. Verfahren gemäß einem der Ansprüche 1 bis 7, **dadurch gekennzeichnet, dass** die Dosis des verwendeten Behandlungsmittels zwischen 0,4 bis 40 Gramm pro Tonne Früchte oder Gemüse beträgt.

9. Verfahren gemäß einem der Ansprüche 1 bis 8, **dadurch gekennzeichnet, dass** es einen Schritt umfasst, der darin besteht, die Früchte oder das Gemüse, die mit der heißen Behandlungszusammensetzung in Kontakt gebracht worden ist, rasch bis auf eine Temperatur geringer als oder gleich Umgebungstemperatur abzukühlen.

10. Verfahren gemäß Anspruch 10, **dadurch gekennzeichnet, dass** man die Früchte durch Zirkulation mit Luft oder durch Kontakt mit Wasser, dessen/deren Temperatur geringer als oder gleich Umgebungstemperatur ist, abkühlt.

11. Verfahren gemäß einem der vorangehenden Ansprüche, **dadurch gekennzeichnet, dass** die Behandlungszusammensetzung auf eine Temperatur, die zwischen 45 und 55ºC, vorzugsweise zwischen 47 und 52ºC liegt, gebracht wird.
